**Europäisches Patentamt**

**European Patent Office**

**Office européen des brevets**

(19)

(11) Veröffentlichungsnummer : **0 048 800**
**B1**

# (12) EUROPÄISCHE PATENTSCHRIFT

(45) Veröffentlichungstag der Patentschrift :
30.01.85

(21) Anmeldenummer : **81105855.1**

(22) Anmeldetag : **24.07.81**

(51) Int. Cl.⁴ : **C 01 C   3/02**

(54) **Verfahren zur Herstellung von Cyanwasserstoff.**

(30) Priorität : **27.09.80 DE 3036599**

(43) Veröffentlichungstag der Anmeldung :
**07.04.82 Patentblatt 82/14**

(45) Bekanntmachung des Hinweises auf die Patenterteilung : **30.01.85 Patentblatt 85/05**

(84) Benannte Vertragsstaaten :
**AT BE CH DE FR GB IT LI NL SE**

(56) Entgegenhaltungen :
**DE-A- 2 913 925**
**DE-B- 2 350 212**
**DE-C-   959 364**
**DE-C- 1 143 497**
**GB-A-   913 836**
**US-A- 2 006 981**
**ULLMANNS ENCYKLOPÄDIE DER TECHNISCHEN CHEMIE, 4. Auflage, Band 9, VERLAG CHEMIE, Weinheim/Bergstr. Seite 659**
**DECHEMA-MONOGRAPHIEN, Band 33, "Betriebstechnik, Verfahren und Operationen" Deutsche Gesellschaft für chemisches Apparatewesen e.V. Frankfurt am Main 1959, VERLAG CHEMIE GMBH, Weinheim/Bergstr. F ENDTER "Die Herstellung von Blausäure aus Methan und Ammoniak ohne Zusatz von Sauerstoff oder sauerstoffhaltigen Gasen" Seiten 28 bis 46**

(73) Patentinhaber : **Degussa Aktiengesellschaft**
**Weissfrauenstrasse 9**
**D-6000 Frankfurt am Main 1 (DE)**

(72) Erfinder : **Voigt, Carl, Dr., Dipl.-Chem.**
**Im Heegholz 5**
**D-6458 Rodenbach 2 (DE)**
Erfinder : **Kleinschmit, Peter, Dr., Dipl.-Chem.**
**Wildaustrasse 19**
**D-6450 Hanau 9 (DE)**
Erfinder : **Schreyer, Gerd, Dr., Dipl.-Chem.**
**Wildaustrasse 22**
**D-6450 Hanau 9 (DE)**
Erfinder : **Sperka, Gerhard, Dr., Dipl.-Chem.**
**Im Vogelsang 3**
**D-8755 Alzenau (DE)**

EP 0 048 800 B1

## Beschreibung

Bekanntlich geht das sogenannte BMA-Verfahren zur Herstellung des Cyanwasserstoffes bzw. der Blausäure von Methan und Ammoniak aus und arbeitet in Abwesenheit von Sauerstoff oder Luft.

Die Reaktion an sich wird in hängenden Reaktionsrohren aus gesintertem Aluminiumoxid, die innen mit einem Platinkatalysator belegt sind, durchgeführt.

Da die Reaktion endotherm verläuft, werden die Reaktionsrohre beheizt und dabei Reaktionstemperaturen um 1 300 °C erhalten. Um das Eintreten der Rückreaktion zu vermeiden, muss das entstandene cyanwasserstoffhaltige Gasgemisch rasch auf Temperaturen unterhalb von 400 bis 300 °C abgekühlt werden, was in einer wassergekühlten Kammer aus Aluminium im Ofenkopf selbst erfolgt, s. Ullmann Enzyklopädie der technischen Chemie, 4. Auflage, Bd. 9, Seite 659 ; Dechema-Monografie, 1959, Heft 33, Seite 28 bis 46 und auch DE-C-959 364.

Da die Reaktion endotherm verläuft, wird neben dem Synthesegas eine grosse Menge an Heizgas benötigt, die das BMA-Verfahren von einer direkten Methan- bzw. Erdgasversorgung abhängig macht.

Es ist deshalb nicht für jeden Standort geeignet.

Wie in der DE-A-29 13 925 beschrieben, lässt sich dieser Nachteil durch Verwendung von Flüssiggasen als alternative Kohlenstoffquelle beheben.

Ganz besonders günstig wäre es, wenn man neben leicht transport- und lagerfähigen Kohlenstoffverbindungen solche Kohlenstoffverbindungen zum Einsatz bringen könnte, die bei der Umsetzung mit Ammoniak ein Restgas liefern, dessen Heizwert genügt, um den Grossteil der für die Reaktion benötigten Energie zu liefern.

Es wurde nun gefunden, dass man diesen Zweck erreicht, wenn man bei der Gewinnung von Cyanwasserstoff nach dem Blausäure-Methan-Ammoniak-Verfahren anstelle von Methan aliphatische Alkohole mit 2-4 Kohlenstoffatomen bzw. deren Mischungen untereinander mit Ammoniak bei einem Einsatz-Atomverhältnis C : N von 0,8 : 1 bis 2 : 1, gegebenenfalls in Gegenwart von zusätzlichem Wasserstoff, umsetzt, von nicht umgesetztem Ammoniak abtrennt und das anfallende Gasgemisch in an sich bekannter Weise in Cyanwasserstoff und Restgas auftrennt.

Als aliphatische Alkohole kommen die niederen Alkohole wie z. B. Äthylalkohol, Propylalkohole und Butylalkohole oder Diole wie Butandiol in Frage.

Zwar ist man nach der DE-C-11 43 497 auch schon von Methylalkohol bei der Cyanwasserstoff-Herstellung ausgegangen, gelangt jedoch zu relativ niedrigen Ausbeuten, wobei als Katalysator die Metalle der Platingruppe oder Oxide bzw. Oxidgemische der Metalle der II und IV Nebengruppe, die ggfls. auf die Oxide des Aluminiums oder Siliciums aufgebracht sein können, gleichberechtigt Verwendung finden.

Anmeldungsgemäß bevorzugt ist Äthylalkohol, und zwar sowohl in technischer, wie reiner Form.

Der aliphatische Alkohol und Ammoniak, das in seiner im BMA-Verfahren üblichen gasförmigen Form verwendet wird, werden in solchen Mengen eingesetzt, dass das C : N-Atomverhaltnis 0,8 : 1 bis 2 : 1 beträgt, bevorzugt aber 1,4 : 1 bis 1,8 : 1. Sehr günstig erwies sich ein Atomverhältnis von 1,4 : 1 bis 1,6 : 1, da dort nur mässige Russbildung auftrat, und die Verwendung von zusätzlichem Wasserstoff nicht nötig war. Die Ausbeuten an HCN betrugen z. B. 94 % HCN, bezogen auf ein Kohlenstoffatom des eingesetzten Äthylalkohols, bzw. 74 % HCN, bezogen auf Ammoniak.

Die Russbildung nimmt jedoch mit steigendem C : N-Verhältnis zu. Sie würde innerhalb kurzer Zeit zu einer Desaktivierung des Kontaktes und zu drastischen Ausbeuteeinbussen führen.

Derartige Ablagerungen von Kohlenstoffpartikeln lassen sich aber durch Verwendung von zusätzlichem Wasserstoff unterdrücken.

Eine solche Massnahme ist in dem unteren Bereich des C : N-Verhältnisses von etwa 1,5 : 1 nicht zwingend erforderlich, wirkt sich aber auch in diesem Fall schon schonend auf die Kontakte aus.

Steigt das C : N-Verhältnis auf Werte oberhalb 1,8 : 1, so empfiehlt sich, pro Mol Ammoniak mindestens 1 Mol Wasserstoff einzuspeisen.

So ergaben sich günstige Ausbeuteergebnisse, z. B. beim Verhältnis 2 : 1 etwa 93 % HCN, bezogen auf ein Kohlenstoffatom des eingesetzten Äthylalkohols, bzw. 91 % HCN, bezogen auf Ammoniak, ohne dass eine Russbildung auftrat.

Das erfindungsgemässe Verfahren verlangt keine spezielle Vorbehandlung der Ausgangsstoffe, wie z. B. völlige Trockenheit.

So lassen sich mit gutem Erfolg Alkohole mit bis zu 10 Gew.-% Wasser einsetzen, ebenso Ammoniak mit bis zu 5 Gew.-% Wasser.

Das erfindungsgemässe Verfahren ist daher ohne weiteres in bestehenden BMA-Anlagen durchführbar.

Besonders günstig ist aber, dass das nach der Abtrennung des Cyanwasserstoffs anfallende Restgas, das neben Wasserstoff einen hohen CO-Gehalt aufweist, sofort als Heizgas verwendet werden kann und damit den Wärmebedarf der Reaktion ganz oder teilweise deckt.

Da das BMA-Verfahren ohne Sauerstoff arbeitet und daher besonders anfällig gegen Verrussungen ist, war es nicht vorhersehbar, dass sich dieses Verfahren ohne grössere technische Schwierigkeiten mit Alkoholen, vor allem Äthylalkohol, als Kohlenstoffquelle durchführen lässt und dass das dabei anfallende Restgas in einer so günstigen Weise für das Verfahren verwendet werden kann.

Die Reaktion wurde unter den üblichen Temperatur- und Druckbedingungen der BMA-Synthese durchgeführt.

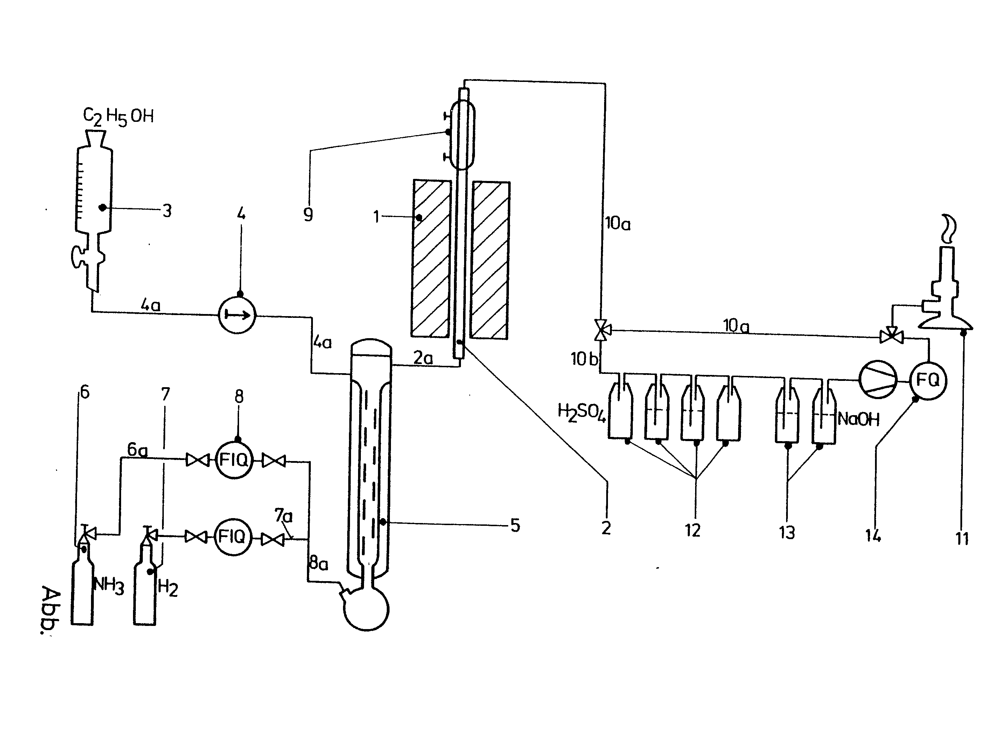

Das erfindungsgemässe Verfahren wird in Abb. 1 beispielhaft beschrieben : (2a, 4a, 6a, 7a, und 8a bedeuten Leitungen).

Die Reaktion findet in einem heizbaren Reaktor 1 statt, in dessen Innerem sich das keramische Kontaktrohr 2 befindet.

Der Alkohol wird aus dem Vorratsgefäss 3 mittels Dosierpumpe 4 in den Verdampfer 5 geführt und dort mit den Gasen, die aus den Vorratsflaschen 6 ($NH_3$) und 7 ($H_2$) über die Regler 8 eingeführt werden, vermischt.

Nach der Synthese wird das Produktgas im Kühler 9 auf kurzem Wege auf Temperaturen unterhalb 100 °C gebracht und über Leitung 10a im Brenner 11 entsorgt.

Für eine analytische Auswertung wird im Bypass über Leitung 10b das nicht umgesetzte Ammoniak in den Adsorptionsvorlagen 12, die mit Schwefelsäure gefüllt sind, aufgefangen und nasschemisch in bekannter Weise analysiert.

Der gebildete Cyanwasserstoff wird in den beiden mit Natronlauge gefüllten Vorlagen 13 adsorbiert und als Natriumcyanid ebenfalls in bekannter Weise nasschemisch analysiert.

Die Restgasmenge wird über Gasuhr 14 mengenmässig bestimmt und ihre Zusammensetzung mittels Gaschromatographie analysiert.

Um die Qualität eines gegebenen Kontaktes vor und nach Durchführung des erfindungsgemässen Verfahren beurteilen zu können, wird jeweils zu Beginn und am Ende einer Versuchsserie die Synthese nach der üblichen BMA-Methode, d. h. mit Methan und Ammoniak, durchgeführt.

Eine Kontakt-Desaktivierung, z. B. durch Russbildung, würde sich in einem solchen Fall ausbeutemindernd auf das Standardverfahren auswirken.

Versuche unter wechselnden C : N-Verhältnissen sind im Beispiel für Äthanol ausführlich angegeben und in Tabelle 1 zusammengefasst.

Dabei bedeutet Spalte I die Versuchsnummer, Spalte II das C : N-Verhältnis, Spalte III die Versuchsdauer in Stunden, bei Versuchsserien kummuliert, Spalte IV die Ausbeute in Gew.-%, bezogen auf 1 Kohlenstoffatom des eingesetzten Äthanols (der 2. Kohlenstoff findet sich im Restgas als CO wieder) und eingesetztes Ammoniak. In Spalte V ist die gaschromatographisch ermittelte Restgasanalyse wiedergegeben, in Spalte VI die Menge an Restgas in Litern.

Die Kommentierung der Versuchsergebnisse finden sich in Spalte 7, wobei eine wachsende Zahl an Kreuzen eine zunehmende Verrussung symbolisieren soll.

Die Qualitätskontrolle des Kontaktes (üblicher BMA-Kontakt) lässt sich aus den Angaben « Standard vor » und « Standard nach » ablesen.

Der für das erfindungsgemässe Verfahren günstige Einfluss des Wasserstoffs ergibt sich aus dem Vergleich der Versuche 30-45 zu Versuch 29.

Das erfindungsgemässe Verfahren wird an Hand der nachstehenden Beispiele beschrieben :

### Beispiel 1-45

In der beschriebenen BMA-Apparatur wird ein Gasgemisch, bestehend aus Äthanol, Ammoniak und zum Teil Wasserstoff umgesetzt und analysiert. Die molare Zusammensetzung der Einzelgase sowie die analytische Auswertung sind in Tabelle 1 zusammengefasst und werden dort kommentiert. Der molare Durchsatz betrug 1 Mol Ammoniak pro Stunde.

### Beispiel 46

In einer an sich gleichen Apparatur wie in den Beispielen 1-45 wird ein Gasgemisch umgesetzt, dessen molare Zusammensetzung aus 0,33 Mol Propanol-2 und 1 Mol $NH_3$ pro Stunde bestand. Die Ausbeute betrug 74,85 %, bezogen auf 2/3 der eingesetzten Kohlenstoffatome, und 49,9 %, bezogen auf Ammoniak. Ein Drittel des eingesetzten Kohlenstoffs findet sich im Restgas wieder, in dem gaschromatographisch 6,1 % $N_2$, 12,16 % CO und 81,74 % $H_2$ (Differenz zu 100 %) nachgewiesen wurden.

### Beispiel 47

Analog Beispiel 46, jedoch mit 0,25 Mol i-Butanol und 1 Mol $NH_3$ pro Stunde.

Die Ausbeute betrug 52,4 %, bezogen auf 3/4 der eingesetzten Kohlenstoffatome, und 39,3 %, bezogen auf Ammoniak. Ein Viertel des eingesetzten Kohlenstoffs findet sich im Restgas wieder, in dem gaschromatographisch 7,62 % $N_2$, 8,72 % CO und 83,66 % $H_2$ (Differenz zu 100 %) nachgewiesen wurden.

(Siehe Tabelle 1 Seite 4 f.)

### Tabelle 1

#### Versuche mit Äthanol

| I Vers.-Nr. | II Verhältnis C : N | III Dauer h kum. | IV Ausbeute % bez. auf 1 C | NH₃ | V Restgasanalyse H₂ | CH₄ Vol % | CO | VI Restgas l | VII Russbildung + gering ++ mittel +++ stark |
|---|---|---|---|---|---|---|---|---|---|
| 1 | CH₄ | 1 | 99,03 | 95,22 | — | — | — | 80,3 | Standard vor |
| 2 | 1,57 : 1 | 2,5 | 82,69 | 64,81 | 77,3 | 0,2 | 17,1 | 243,4 | |
| 3 | 1,58 : 1 | 5,0 | 94,08 | 74,3 | 77,1 | 0,1 | 17,2 | 247,9 | + |
| 4 | 1,58 : 1 | 7,5 | 90,52 | 71,5 | 75,9 | 0,1 | 16,8 | 258,5 | + |
| 5 | 1,58 : 1 | 10,0 | 92,24 | 72,9 | 76,6 | 0,1 | 17,2 | 265,5 | + |
| 6 | 1,58 : 1 | 12,5 | 87,78 | 69,4 | 77,8 | 0,3 | 17,1 | 233,5 | + |
| 7 | 1,57 : 1 | 15,0 | 93,04 | 72,9 | 77,8 | 0,1 | 17,2 | 261,9 | + |
| 8 | 1,58 : 1 | 17,5 | 85,78 | 67,8 | 76,1 | 0,4 | 16,8 | (231,4) | + |
| 9 | 1,59 : 1 | 20,0 | 85,05 | 67,8 | 76,5 | 0,1 | 17,5 | 269,5 | + |
| 10 | 1,57 : 1 | 22,5 | 87,56 | 68,6 | 76,0 | 0,3 | 16,5 | 261,7 | + |
| 11 | 1,58 : 1 | 25,0 | 92,13 | 72,8 | 77,4 | 0,1 | 16,8 | 268,6 | + |
| 12 | 1,58 : 1 | 27,5 | 91,87 | 72,6 | 77,1 | 0,1 | 16,6 | 268,3 | + |
| 13 | 1,57 : 1 | 30,0 | 87,22 | 68,3 | 76,6 | 0,2 | 17,0 | 258,9 | + |
| 14 | CH₄ | 1 | 100 | 96 | | — | | 81,2 | Standard nach |
| 15 | CH₄ | 1 | 90,2 | 86,7 | | — | | 78,4 | Standard vor |
| 16 | 1,4 : 1 | 2,5 | 78,61 | 55,0 | 76,0 | 0,3 | 15,7 | 235,1 | keine |
| 17 | 1,4 : 1 | 5,0 | 80,42 | 56,3 | — | — | — | 231,4 | keine |
| 18 | 1,4 : 1 | 7,5 | 81,37 | 57,0 | — | — | — | 237,6 | keine |
| 19 | 1,4 : 1 | 10,0 | 82,54 | 57,8 | — | — | — | 241,1 | + |
| 20 | 1,4 : 1 | 12,5 | 76,77 | 53,8 | 76,2 | 0,4 | 15,3 | 234,0 | + |
| 21 | 1,4 : 1 | 15,0 | 80,76 | 56,6 | — | — | — | 240,5 | + |
| 22 | 1,4 : 1 | 17,5 | 83,95 | 58,8 | 78,9 | 0,2 | 16,0 | 241,7 | + |
| 23 | 1,4 : 1 | 20,0 | 87,72 | 61,5 | — | — | — | 248,5 | + |
| 24 | 1,4 : 1 | 22,5 | 82,37 | 57,7 | — | — | — | 244,2 | keine |
| 25 | 1,4 : 1 | 25,0 | 76,68 | 53,7 | 76,8 | 0,3 | 15,4 | 235,6 | keine |
| 26 | 1,4 : 1 | 27,5 | 72,28 | 50,7 | — | — | — | 230,1 | keine |
| 27 | 1,4 : 1 | 30,0 | 72,21 | 54,1 | 77,1 | 0,1 | 15,2 | 236,9 | keine |
| 28 | CH₄ | 1 | 99,0 | 95,2 | — | — | — | 83,4 | Standard nach |
| 29 | 2 : 1 | 2 | 79,14 | 76,85 | — | — | — | 305 | +++ |
| 30 | Wasserstoffzugabe $1,96 : 1 + \dfrac{0,5\ \text{Mol H}_2}{\text{Mol C}_2\text{H}_5\text{OH}}$ | 2 | 90,25 | 85,02 | 79,1 | 0,2 | 17,1 | 260,2 | + |
| 31 | $1,96 : 1 + \dfrac{1\ \text{Mol H}_2}{\text{Mol C}_2\text{H}_5\text{OH}}$ | 2 | 90,23 | 85,07 | 80,4 | 0,1 | 16,0 | 272,7 | keine |
| 32 | CH₄ | 1 | 99,11 | 95,3 | — | — | — | 83,4 | Standard vor |
| 33 | $1,95 : 1 + \dfrac{1\ \text{Mol H}_2}{\text{Mol C}_2\text{H}_5\text{OH}}$ | 2,5 | 90,20 | 84,67 | — | — | — | 352,6 | keine |
| 34 | $1,95 : 1 + \dfrac{1\ \text{Mol H}_2}{\text{Mol C}_2\text{H}_5\text{OH}}$ | 5,0 | 91,17 | 85,58 | 79,5 | 0,1 | 19,9 | 344,8 | keine |
| 35 | " | 7,5 | 91,91 | 86,28 | — | — | — | 348,8 | keine |
| 36 | " | 10,0 | 91,08 | 85,49 | 80,9 | 0,2 | 16,1 | 341,6 | keine |
| 37 | " | 12,5 | 91,52 | 85,91 | — | — | — | 349,9 | keine |
| 38 | " | 15,0 | 89,35 | 83,87 | 80,2 | 0,2 | 16,5 | 343,5 | keine |
| 39 | " | 17,5 | 91,75 | 86,13 | — | — | — | 354,2 | keine |
| 40 | " | 20,0 | 91,21 | 85,63 | 81,3 | 0,1 | 16,1 | 346,5 | keine |
| 41 | " | 22,5 | 91,31 | 85,71 | — | — | — | 351,9 | keine |
| 42 | " | 25,0 | 91,11 | 85,52 | 80,6 | 0,1 | 15,9 | 350,4 | keine |
| 43 | " | 27,5 | 91,14 | 85,56 | — | — | — | 348,9 | keine |
| 44 | " | 30,0 | 89,92 | 84,41 | 80,3 | 0,1 | 15,9 | 350,7 | keine |
| 45 | CH₄ | 1 | 98,96 | 95,2 | — | — | — | 79,1 | Standard nach |

## Ansprüche

1. Verfahren zur Gewinnung von Cyanwasserstoff durch Umsetzen von kohlenstoffhaltigen Verbindungen mit Ammoniak in Keramikrohren, die innen mit Platinmetall bzw. platinhaltigen Verbindungen beschichtet sind nach den Bedingungen des Blausäure-Methan-Ammoniak-Verfahrens, dadurch gekennzeichnet, dass man aliphatische Alkohole mit 2-4 Kohlenstoffatomen, bzw. deren Mischungen untereinander, mit Ammoniak bei einem Einsatz-Atomverhältnis C : N von 0,8 : 1 bis 2 : 1, gegebenenfalls in Gegenwart von zusätzlichem Wasserstoff, umsetzt, von nicht umgesetztem Ammoniak abtrennt und das

**0 048 800**

anfallende Gasgemisch in an sich bekannter Weise in Cyanwasserstoff und Restgas auftrennt.

2. Verfahren nach Anspruch 1, dadurch gekennzeichnet, dass man aliphatische Alkohole mit einem Wassergehalt bis zu 10 Gew.-% einsetzt.

3. Verfahren nach Anspruch 1 und 2, dadurch gekennzeichnet, dass man ein Ammoniak mit einem Wassergehalt bis zu 5 Gew.-% einsetzt.

4. Verfahren nach Anspruch 1-3, dadurch gekennzeichnet, dass man als aliphatischen Alkohol Äthylalkohol einsetzt.

5. Verfahren nach Anspruch 1-4, dadurch gekennzeichnet, dass man Äthylalkohol und Ammoniak mit einem Atomverhältnis C : N von 1,4 : 1 bis 1,8 : 1 zur Umsetzung einsetzt, sehr bevorzugt von 1,4 zu 1 bis 1,6 zu 1.

6. Verfahren nach Anspruch 1-4, dadurch gekennzeichnet, dass man Äthylalkohol und Ammoniak mit einem Atomverhältnis C : N von 1,8 : 1 bis 2 : 1 und pro Mol Ammoniak mindestens 1 Mol Wasserstoff zur Umsetzung einsetzt.

7. Verfahren nach Anspruch 1-6, dadurch gekennzeichnet, dass man das nach der Abtrennung von Ammoniak und Cyanwasserstoff anfallende Restgas direkt zur Beheizung des Reaktionsofens verwendet.

**Claims**

1. Process for obtaining hydrogen cyanide by reacting carbon-containing compounds with ammonia in ceramic tubes which are internally coated with platinum metal or platinum-containing compounds under the conditions of the hydrocyanic acid methane ammonia process, characterised in that aliphatic alcohols containing 2 to 4 carbon atoms, or mixtures thereof, are reacted with ammonia in a starting atomic ratio C : N of 0.8 ; 1 to 2 : 1, optionally in the presence of additional hydrogen, and are separated from unreacted ammonia, and the resultant gaseous mixture is split in known manner into hydrogen cyanide and residual gas.

2. Process according to claim 1, characterised in that aliphatic alcohols with a water content of up to 10 % by weight are used.

3. Process according to claims 1 and 2, characterised in that an ammonia having a water content of up to 5 % by weight is used.

4. Process according to claims 1 to 3, characterised in that ethyl alcohol is used as aliphatic alcohol.

5. Process according to claims 1 to 4, characterised in that ethyl alcohol and ammonia with an atomic ratio C : N of 1.4 : 1 to 1.8 : 1 are used for the reaction, very preferably of 1.4 : 1 to 1.6 : 1.

6. Process according to claims 1 to 4, characterised in that ethyl alcohol and ammonia with an atomic ratio C : N of 1.8 : 1 to 2 : 1 and at least 1 mol of hydrogen per mol of ammonia are used for the reaction.

7. Process according to claims 1 to 6, characterised in that the residual gas yielded after separation of ammonia and hydrogen cyanide is used directly for heating the reaction furnace.

**Revendications**

1. Procédé pour la production d'acide cyanhydrique par la réaction de composés contenant du carbone avec de l'ammoniac dans des tubes céramiques, qui sont revêtus intérieurement de platine-métal ou de composés contenant du métal, selon les conditions du procédé acide prussique-méthane-ammoniac, caractérisé en ce que l'on fait réagir des alcools aliphatiques à 2 à 4 atomes de carbone, ou leurs mélanges, avec de l'ammoniac dans un rapport atomique, à l'introduction, C : N de 0,8 : 1 à 2 : 1, éventuellement en présence d'hydrogène supplémentaire, que l'on sépare l'ammoniac n'ayant pas réagi et que l'on sépare le mélange gazeux obtenu, d'une manière connue, en acide cyanhydrique et en gaz résiduel.

2. Procédé selon la revendication 1, caractérisé en ce que l'on utilise des alcools aliphatiques avec une teneur en eau jusqu'à 10 %-poids.

3. Procédé selon l'une des revendications 1 ou 2, caractérisé en ce que l'on utilise un ammoniac avec une teneur en eau jusqu'à 5 %-poids.

4. Procédé selon l'une quelconque des revendications 1 à 3, caractérisé en ce que l'on utilise en tant qu'alcool aliphatique de l'alcool éthylique.

5. Procédé selon l'une quelconque des revendications 1 à 4, caractérisé en ce que l'on utilise, pour la réaction, de l'alcool éthylique et de l'ammoniac avec un rapport atomique C : N de 1,4 : 1 à 1,8 : 1, de préférence de 1,4 : 1 à 1,6 : 1.

6. Procédé selon l'une quelconque des revendications 1 à 4, caractérisé en ce que l'on utilise pour la réaction de l'alcool éthylique et de l'ammoniac avec un rapport atomique C : N de 1,8 : 1 à 2 : 1 et au moins 1 mol d'hydrogène par mol d'ammoniac.

7. Procédé selon l'une quelconque des revendications 1 à 6, caractérisé en ce que l'on utilise directement pour le chauffage du four de réaction le gaz résiduel obtenu après la séparation de l'ammoniac et de l'acide cyanhydrique.

5

Abb.